# EUROPEAN PATENT SPECIFICATION

(11) **EP 4 567 450 B1**
(45) Date of publication and mention of the grant of the patent: **22.04.2026**
(21) Application number: 23307158.8
(22) Date of filing: 08.12.2023
(51) Int. Cl.: G01S 7/02, G01S 13/32, G01S 13/34, G01S 13/42, G01S 13/87, G01S 13/931

(54) **A MULTIPLE INPUT MULTIPLE OUTPUT RADAR SYSTEM**
RADARSYSTEM MIT MEHREREN EINGÄNGEN UND MEHREREN AUSGÄNGEN
SYSTÈME RADAR À ENTRÉES MULTIPLES ET SORTIES MULTIPLES

(43) Date of publication of application: 11.06.2025
(73) Proprietor: NXP B.V., 5656 AG Eindhoven (NL)
(72) Inventor: Jansen, Feike Guus, 5656AE Eindhoven (NL); Ganzerli, Marcello, 5656AE Eindhoven (NL); Doaré, Olivier Vincent, 31023 Toulouse (FR); Neofytou, Marios, 5656AE Eindhoven (NL)
(74) Representative: Colaiuda, Antonella

(56) References cited:
- US-A1- 2020 233 076
- US-B2- 11 614 531
- DANIEL J RABIDEAU: "Doppler-offset waveforms for MIMO radar", RADAR CONFERENCE (RADAR), 2011 IEEE, IEEE, 23 May 2011 (2011-05-23), pages 965 - 970, XP031902243, ISBN: 978-1-4244-8901-5, DOI: 10.1109/RADAR.2011.5960679
- VAN ROSSUM WIM ET AL: "Doppler ambiguity resolution using random slow-time code division multiple access MIMO radar with sparse signal processing", 2018 IEEE RADAR CONFERENCE (RADARCONF18), IEEE, 23 April 2018 (2018-04-23), pages 441 - 446, XP033356246, DOI: 10.1109/RADAR.2018.8378599

## Description

### Field

The present disclosure relates to a multiple input multiple output (MIMO) radar system, a corresponding transmitter apparatus, a corresponding receiver apparatus, a method and an automotive vehicle comprising the MIMO radar system.

### Summary

According to a first aspect of the present disclosure, there is provided a multiple input multiple output, MIMO, radar system comprising: a plurality of transmit paths wherein each transmit path is configured to transmit a corresponding output radar signal for detection and ranging, wherein each transmit path comprises: a transmit antenna; a phase rotator; and wherein the phase rotator is configured to, for each output radar signal, apply: a Doppler Division Multiplexing, DDM, phase rotation to each output radar signal prior to transmission by the transmit antenna, and, a scrambling phase rotation to each output radar signal prior to transmission by the transmit antenna, wherein: the DDM phase rotation applied by each phase rotator of each transmit path is according to a DDM phase schedule; and the scrambling phase rotation applied by each phase rotator of each transmit path is the same as the scrambling phase rotation applied by each other phase rotator of the other transmit paths; and wherein the MIMO system further comprises a plurality of receive paths configured to receive reflected versions of the output radar signals from a reflector.

In one or more embodiments, the transmitted radar signals may be frequency modulated continuous wave radar signals.

In one or more embodiments, the MIMO radar system may comprise a phase rotation controller configured to control the DDM phase rotation and the scrambling phase rotation applied by each of the phase rotators of each of the transmit paths.

In one or more embodiments, the MIMO radar system may be configured to cause each transmitter to transmit a set of radar signals wherein the set of radar signals comprises a predetermined number of consecutively transmitted radar signals and wherein the scrambling phase rotation is different for each transmitted radar signal in the set of transmitted radar signals.

In one or more embodiments, the scrambling phase rotations may be selected to cover at least a subset of the full range of possible phase rotations of the phase rotator.

In one or more embodiments, the scrambling phase rotations may be selected to cover the full range of possible phase rotations of the phase rotator.

In one or more embodiments, the phase rotation controller may be configured to apply a modulo operation to the phase offsets in order to maintain values within the programmable range of the phase rotators.

In one or more embodiments, the scrambling phase rotations may be one of a random; and a pseudo-randomly determined phase rotation.

According to a second aspect of the present disclosure, there is provided a transmission apparatus of a multiple input multiple output, MIMO, radar system comprising: a plurality of transmit paths wherein each transmit path is configured to transmit a corresponding output radar signal for detection and ranging, wherein each transmit path comprises: a transmit antenna; a phase rotator; and wherein the phase rotator is configured to, for each output radar signal, apply: a Doppler Division Multiplexing, DDM, phase rotation to each output radar signal prior to transmission by the transmit antenna, and, a scrambling phase rotation to each output radar signal prior to transmission by the transmit antenna, wherein: the DDM phase rotation applied by each phase rotator of each transmit path is according to a DDM phase schedule; and the scrambling phase rotation applied by each phase rotator of each transmit path is the same as the scrambling phase rotation applied by each other phase rotator of the other transmit paths.

According to a third aspect of the present disclosure, there is provided a method of performing ranging and detection using a multiple input multiple output, MIMO, radar system that comprises a plurality of transmit paths wherein each transmit path comprises a transmit antenna and a phase rotator, the method comprising for each transit path: receiving an output radar signal at the phase rotator; applying, by way of the phase rotator, a Doppler Division Multiplexing (DDM) phase rotation to each output radar signal prior to transmission by a transmit antenna; applying, by way of the phase rotator, a scrambling phase rotation to each output radar signal prior to transmission by the transmit antenna, wherein: the DDM phase rotation applied by each phase rotator of each transmit path is according to a DDM phase schedule; the scrambling phase rotation applied by each phase rotator of each transmit path is the same as the scrambling phase rotation applied by each other phase rotator of the other transmit paths; transmitting the phase-rotated output radar signal by way of the transmit antenna, the method further comprising, at a plurality of receive paths wherein each receive path comprises a receiver: receiving, by way of the receiver, reflected versions of the output radar signals from a reflector.

According to a fourth aspect of the present disclosure, there is provided an automotive vehicle comprising the radar system of any of the first aspect.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a MIMO radar system of the present disclosure;
Figure 2 shows an example idealized Doppler spectrum for a single reflector where DDM has been employed with four transmitters;
Figure 3 shows a Doppler spectrum that depicts the presence of spurs resulting from phase errors;
Figure 4 shows an example of Doppler Division Multiplexing (DDM) phase rotations applied to each frequency ramp in a set of consecutively output frequency ramps for each of four different transmitters in an FMCW MIMO radar system;
Figure 5 shows an example of the scrambling phase rotations applied to each frequency ramp in a set of consecutively output frequency ramps for each of four different transmitters in an FMCW MIMO radar system;
Figure 6 shows an example method according to the present disclosure; and
Figure 7 shows an example automotive vehicle comprising a radar system of the present disclosure.

### Detailed Description

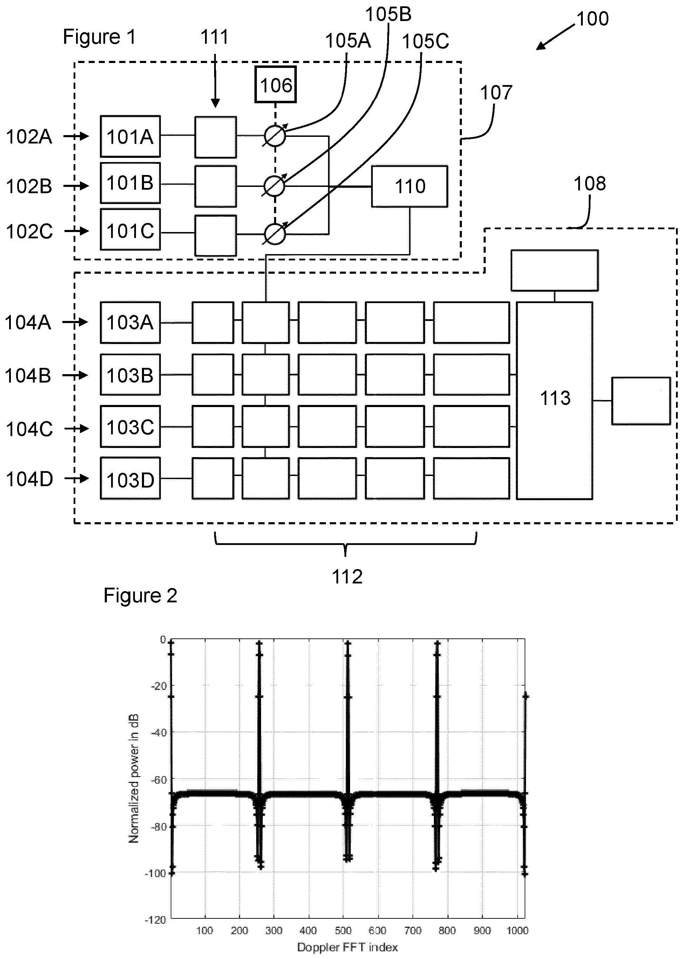

Figure 1 shows a MIMO radar system 100 that comprises multiple transmit antennas 101A - 101C each in a different transmit path 102A - 102C. Radar signals transmitted by the transmit antennas 101A - 101C can be encoded using Doppler Division Multiplexing (DDM) techniques. The transmit paths 102A - 102C form part of a transmitter apparatus 107 of the transmit side. The encoded signals are transmitted from the plurality of transmit antennas 101A - 101C simultaneously. As a result of this, a receive antenna 103A - 103D of a receive path 104A - 104D is exposed to the sum of transmitted signals via reflecting objects.

Due to small offset frequencies between the radar signals output from different transmit antennas 101A - 101C, the individual output radar signals can be recovered by a receiver apparatus 108 on the receive side. In fact, the offset frequencies are on the order of the Doppler frequencies experienced in 79 GHz radar systems and automotive scenarios.

In some radar systems, a sequence of consecutively emitted Frequency Modulated Continuous Wave (FMCW) radar signals is transmitted. At the receive side, a 2D Fast Fourier Transform (FFT) operation can be carried out to estimate distance and relative the radial velocity (Doppler frequency) of the reflector from which the output radar signals have been reflected prior to being received at the receive side.

The maximum Doppler frequency that can be unambiguously measured is inversely proportional to the duration of a single frequency ramp (also sometimes referred to as a "chirp") of an FMCW signal, including settling time and time of flight. The DDM frequency shifts have to be smaller than this maximum Doppler frequency. Due to this, the sampling theorem is directly fulfilled and the frequency offset can be realized by applying a phase rotation to each frequency ramp. Similar phase offsets may be applied for radar techniques other than FMCW in order to obtain similar results. For example, the technique could be equally applied to at least phase modulated continuous (PMCW) waveforms or orthogonal frequency division multiplexing (OFDM) waveforms. FMCW is used herein by way of example only.

Figure 2 shows an example idealized Doppler spectrum for a single reflector where DDM has been employed with four transmitters.

Phase errors can be introduced into a transmitted signal in a number of ways. For example, a phase rotator 105A - 105C used to set the phase of an output signal may introduce phase error and so may coupling between transmitters in a die with multiple transmitters. Other contributors to phase errors and the resulting spurs may also exist. Since the phase error of an applied phase is correlated to the desired phase, the repetitive usage of the same phase leads to a repetitive occurrence of the same phase error. This leads to spurious frequencies in the Doppler spectrum arising. Spurious frequencies in the Doppler spectrum can exceed the thermal noise floor and degrade the sensitivity of the radar in proximity to strong reflectors.

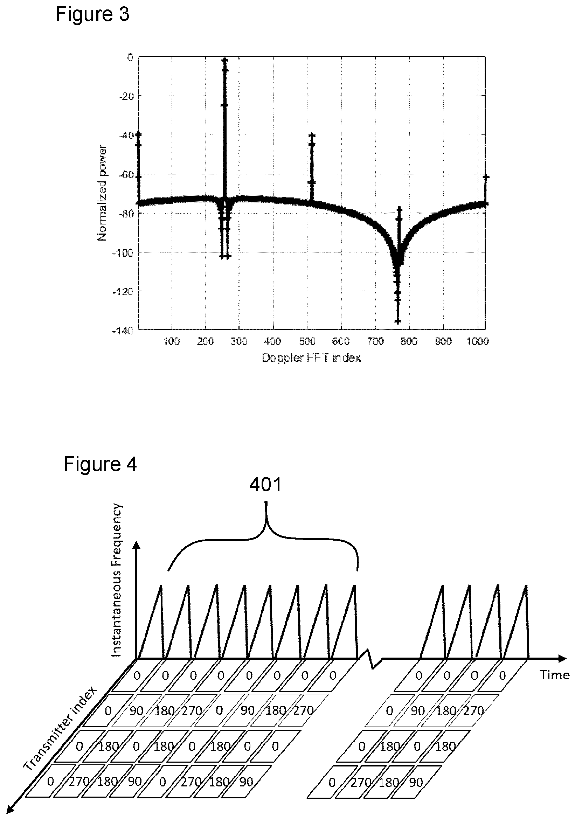

Figure 3 depicts the presence of spurs resulting from phase errors. In the case depicted in figure 3, only one transmitter is activated and coded. The other three transmitters are switched off. The largest peak (tone) is the only desired signal. The rest of the tones are unwanted spurs. The spurs overlap with the Doppler offsets of where the other transmitters may be expected to be observed.

The spurious frequencies are undesired as they can be mistaken as true reflectors leading to ghost objects. Increasing the detection threshold is not a solution, as the dynamic range of the radar system would be compromised by doing this. For example, if the detection threshold were increased, a toddler beside a truck could go undetected. The present disclosure provides a solution that lowers the spurs by spreading their energy over the Doppler spectrum.

Returning to figure 1, a MIMO radar system 100 that comprises a plurality of transmit paths (3 in this case) 102A - 102C in a transmit apparatus 107 on the transmit side and a plurality of receive paths (4 in this case) 104A - 104D in a receiver apparatus 108 on the receiver side. It will be appreciated that the transmit and receive sides may have the same number or a different number of transmit and receive paths. In one or more embodiments, transceivers may be used which provide both the transmitter and receiver functionalities. Circulators or any other suitable means may be used to direct outgoing and incoming radar signals along the appropriate transmit path 102A - 102C or receive path 104A - 104D. In other examples, the transmit antennas 101A - 101C and receive antennas 103A - 103D are separate devices.

Each transmit path also comprises a phase rotator 105A - 105C that is configured to apply a phase rotation to a radar signal for output by the transmit antenna 101A - 101C of the same transmit path 102A - 102C. Each phase rotator 105A - 105C may apply phase rotation to a radar signal received from a signal generator 110 using any suitable technique. The phase rotators 105A - 105C of the radar system 100 may be controlled by a common phase rotation controller 106. The phase rotation controller 106 may be a dedicated controller for controlling the phase of output radar signals or it may be part of a wider controller for the radar system 100. In yet other examples, the phase rotation controller 106 may be part of an even more over-arching device, such as the controller of an automotive vehicle. In one or more alternative embodiments, each phase rotator 105A - 105C may be controlled by its own separate dedicated phase rotation controller.

Figure 4 shows an example of Doppler Division Multiplexing (DDM) phase rotations applied to each frequency ramp in a set of consecutively output frequency ramps 401 for each of four different transmitters in an FMCW MIMO radar system. Each phase rotator is configured to apply to each output radar signal a DDM phase rotation prior to transmission by the transmit antenna. Figure 4 further shows that the phases of the consecutively output radar signals of each of the second through fourth transmit paths change according to different patterns compared to each other. In this example, the phase of the second consecutively emitted radar signals from the second transmit path changes by 90 degrees per consecutively emitted radar signal. The phase of the third consecutively emitted radar signals from the third transmit path changes by 180 degrees per consecutively emitted radar signal. The phase of the fourth consecutively emitted radar signals from the fourth transmit path changes by - 90 degrees per consecutively emitted radar signal. Thus, where the transmit antenna of each transmit path is configured to transmit a plurality of consecutively output radar signals, the phase difference between consecutively output radar signals is different for each transmit paths. More generally, in the case of four transmitters, the phase shifts applied to each transmitter are integer multiples of 90 degrees. That is, the DDM phase rotations are applied according to a DDM phase schedule.

Each phase rotator 105A - 105C is further configured to apply to each output radar signal a scrambling phase rotation. The scrambling phase rotation applied by each phase rotator 105A - 105C of each transmit path is the same as the scrambling phase rotation applied by each other phase rotator 105A - 105C of the other transmit paths. By applying a same scrambling phase rotation to each output radar signal of each transmit path, the energy that was, pre-scrambling, located at a specific frequency offset is spread over the sampled Doppler spectrum. Where a plurality of consecutively output radar signals are transmitted by the transmit antennas 101A - 101C of the transmit paths 102A - 102C, the scrambling phase may be different for each consecutive emission such that the energy of the spurs is spread over the Doppler spectrum. By taking the described approach, the undesirable spurs can be spread over the Doppler spectrum, thereby reducing the likelihood of any clear spurs developing above inherent the noise of the system.

It will be appreciated that all phase rotations are applied to the output radar signals prior to transmission by the transmit antennas 101A - 101C.

Each phase rotator 105A - 105C may use a single phase rotation component to apply both the DDM phase rotation and the scrambling phase rotation such that an amalgamated phase rotation is applied to the output radar signals simultaneously.

The phase rotation applied by the phase rotators 105A - 105C may be controlled by one or more phase rotation controllers 106. In one or more embodiments, a single phase rotation controller 106 may control all of the phase rotators 105A - 105C. In other embodiments, a plurality of phase rotation controllers may be provided where each phase rotator is controlled by a different phase rotation controller. The or each phase rotation controller 106 may be configured to control the phase according to a look-up table which contains the phases that should be applied to the output radar signals of the transmit apparatus 107. Alternatively, the or each phase controller 106 may control the phase rotators in any other suitable manner.

The scrambling phase may be selected according to a random number generation technique or according to a pseudo-random number technique. That is, the scrambling phase may be random or pseudo-random.

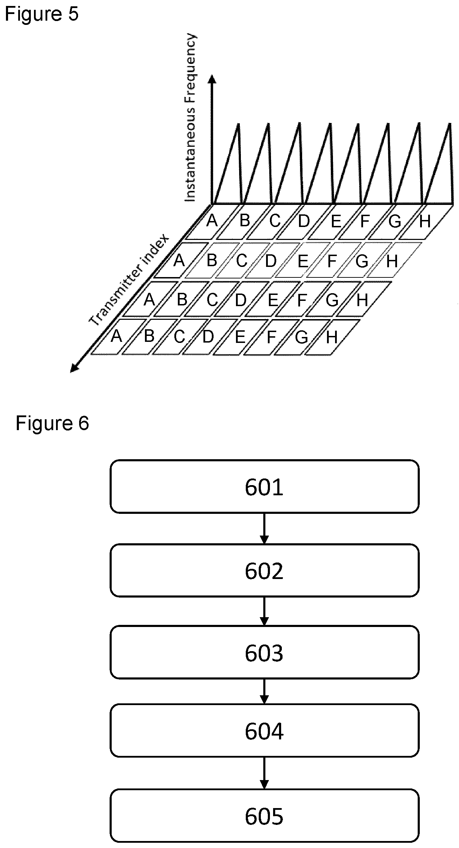

Figure 5 shows an example of the scrambling phase rotations applied to each frequency ramp in a set of consecutively output frequency ramps for each of four different transmitters in an FMCW MIMO radar system. Where the MIMO radar system 100 is configured to output a set of output radar signals comprising a plurality of consecutive radar signals from each transmit path, the scrambling phase applied to each subsequent output radar signal may be different, as demonstrated in Figure 5 where the different scrambling phase shifts are represented by the letters A - H. The scrambling phases applied to each transmitted radar signal at a same particular time, however, will all be the same. Thus, for the first set of transmitted radar signals output by the four different antennas represented in figure 5, the scrambling phase is A in each case. Yet further, the scrambling phases applied across a whole set of a plurality of output radar signals may be selected to cover at least a subset of the full range of possible phase rotations of the phase rotator 105A - 105C. That is, scrambling phase shifts A - H may comprise frequencies over a predefined range. In other examples, the scrambling phases applied across a whole set of a plurality of output radar signals may be selected to cover the full range of possible phase rotations of the phrase rotator 105A - 105C. The wider the range of phases over which the scrambling phases are selected, the more spread-out the energy of the spurs will be. For example, the scrambling phases may be selected from amongst the frequencies of 0 - 90 degrees; 0 - 180 degrees, 0 - 270 degrees or another subset of possible phase rotations. In other examples, the scrambling phases may be selected from across the full range of possible phase rotations of 0 - 360 degrees. The or each phase rotation controller 106 may be configured to apply a modulo operation to the phase offsets in order to maintain the values within a programmed range of the possible phase rotations. Practical limitations may further limit the precise phases that the scrambling phase may take. For example, an N bit phase rotator can produce 2^{N} different phases. The scrambling sequence is a pseudo-random sequence that takes values between 0 and 2^{N}-1. The random value may be added to the desired codes with the modulo operation to stay in range. The scrambling phase may not be a continuous scale and may preferably cover the full range of 360 degrees.

The scrambling phase for each consecutively output radar signal may be predetermined and built into a look-up table. In other embodiments, the or each phase rotation controller 106 may be configured to generate the random or pseudo random phase of the scrambling phase rotation dynamically for each output radar signal and apply this in addition to the DDM phase rotation.

Each transmit path may further comprise one or more power amplifiers 111 configured to amplify the output radar signals prior to transmission by the transmit antennas 101A - 101C. The power amplifiers 111 are shown in figure 1 as being disposed between the phase rotators 105A - 105C and the transmit antennas, however, alternative configurations may also be envisioned by a person skilled in the art.

Each transmit path may further comprise additional components, however, these will not be discussed in detail herein.

The MIMO radar system may further comprise a signal generator 110 configured to generate the pre-phase-rotated output radar signals. The signal generator 110 may form part of the transmit side, as shown in figure 1, or the receive side of the radar apparatus 100. The signal generator 110 will, in many embodiments, be coupled to both the transmit paths 102A - 102C for providing the output radar signals and the receive paths 104A - 104C for mixing purposes. Mixing and other signal processing operations in the receive path will not be discussed in detail in order to avoid unnecessarily describing features of typical radar systems.

Each receive paths of the receive apparatus 108 on the receive side comprises a receive antenna 103A - 103D configured to receive reflections of the output radar signals. Each receive antenna 103A - 103D may receive reflections of output radar signals from a plurality of transmit paths 102A - 102D. That is, the receive paths 104A - 104D may not be configured to receive output radar signals from only a single corresponding transmit path 102A - 102C.

Each receive path 104A - 104D comprises a phase de-rotator configured to de-rotate the DDM phase rotation applied to each output radar signal. The phase de-rotators may be implemented in the digital domain and, as such, may form part of a digital signal processing part 113 of the receive path.

The phase de-rotators may be configured to receive phase rotation information from the or each phase rotation controller 106 in order to determine what phase rotation should be applied in order to properly de-rotate the phase. In other examples, the receiver apparatus 108 may comprise one or more phase de-rotation controllers configured to control the de-rotation of the phases. The or each phase de-rotation controller may comprise identical, corresponding or complementary phase rotation information to the or each phase rotation controller suitable for providing for phase de-rotation. For example, the or each phase de-rotation controller may comprise a look-up library comprising phase de-rotation information. Phase de-rotation may be performed either prior to or after digitisation of the received reflected radar signals.

In one or more embodiments, a distinct descrambling operation may be performed. Descrambling may be implemented with a vector Hadamard product. Such a vector comprises complex conjugate exponentials with a phase corresponding to the ideal phase (the desired phase without error) taken at the offset that was used to generate the scrambling code. The amplitude of the vector may correspond go a window function such as a Chebyshev function, Hamming function or another window function. After the descrambling operation has been performed, the Doppler spectrum can be calculated using an FFT and standard MIMO decoding can be applied.

Figure 6 shows an example method of performing detection and ranging according to the present disclosure. The method comprises a method of performing detection and ranging using a MIMO system that comprises a plurality of transmit paths wherein each transmit path comprises a transmit antenna and a phase rotator. The method comprises the steps of, for each transmit path, receiving 601 an output radar signal at the phase rotator. The received output radar signal may be received from a signal generator, for example. The method further comprises applying 602, by way of the phase rotator, a DDM phase rotation to each output radar signal prior to transmission by the transmit antenna. The method also comprises applying 603, by way of the phase rotator, a scrambling phase rotation to each output radar signal prior to transmission by the transmit antenna.

As discussed in detail above, the DDM phase rotation applied by each phase rotator of each transmit path is different to the DDM rotation applied by each other phase rotator of the other transmit paths. The scrambling phase rotation applied by each phase rotator of each transmit path is the same as the scrambling phase rotation applied by each other phase rotator of the other transmit paths.

The method further comprises transmitting 604 the phase-rotated output radar signal by way of the transmit antenna. The method subsequently comprises, at a plurality of receive paths wherein each receive path comprises a receiver and a phase de-rotator, receiving 605, by way of the receiver, reflected versions of the output radar signals from a reflector.

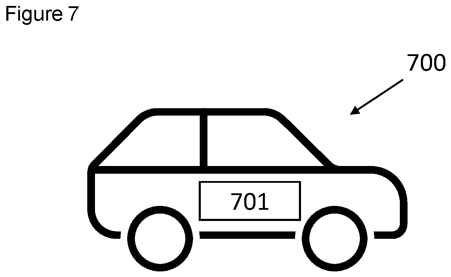

Figure 7 shows an example automotive vehicle 700 which comprises the MIMO radar system 701 as previously disclosed. While figure 7 depicts a car 700, it will be appreciated that the vehicle may be any automotive vehicle which can benefit from an installed radar system. For example, the automotive vehicle may be a car, a van, a lorry, a bus, a construction vehicle or any other vehicle which may share a road with other vehicles are traversing. The MIMO radar system may further be used in vehicles which do not use roads but that might have other obstacles that need to be navigated, such as boats or ships.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

## Claims

1. A multiple input multiple output, MIMO, radar system comprising:
a plurality of transmit paths wherein each transmit path is configured to transmit a corresponding output radar signal for detection and ranging, wherein each transmit path comprises:
a transmit antenna;
a phase rotator; and
wherein the phase rotator is configured to, for each output radar signal, apply:
a Doppler Division Multiplexing, DDM, phase rotation to each output radar signal prior to transmission by the transmit antenna, and,
a scrambling phase rotation to each output radar signal prior to transmission by the transmit antenna, wherein:
the DDM phase rotation applied by each phase rotator of each transmit path is according to a DDM phase schedule; and
the scrambling phase rotation applied by each phase rotator of each transmit path is the same as the scrambling phase rotation
applied by each other phase rotator of the other transmit paths; and
wherein the MIMO system further comprises a plurality of receive paths configured to receive reflected versions of the output radar signals from a reflector.

2. The MIMO radar system of claim 1 wherein the transmitted radar signals are frequency modulated continuous wave radar signals.

3. The MIMO radar system of any preceding claim further comprising a phase rotation controller configured to control the DDM phase rotation and the scrambling phase rotation applied by each of the phase rotators of each of the transmit paths.

4. The MIMO radar system of any preceding claim wherein the MIMO system is configured to cause each transmitter to transmit a set of radar signals wherein the set of radar signals comprises a predetermined number of consecutively transmitted radar signals and wherein the scrambling phase rotation is different for each transmitted radar signal in the set of transmitted radar signals.

5. The MIMO radar system of claim 4 wherein the scrambling phase rotations are selected to cover at least a subset of the full range of possible phase rotations of the phase rotator.

6. The MIMO radar system of claim 5 wherein the scrambling phase rotations are selected to cover the full range of possible phase rotations of the phase rotator.

7. The MIMO radar system of claim 6 wherein the phase rotation controller is configured to apply a modulo operation to the phase offsets in order to maintain values within the programmable range of the phase rotators.

8. The MIMO radar system of any preceding claim wherein the scrambling phase rotations are one of a random; and a pseudo-randomly determined phase rotation.

9. A transmission apparatus of a multiple input multiple output, MIMO, radar system comprising:
a plurality of transmit paths wherein each transmit path is configured to transmit a corresponding output radar signal for detection and ranging, wherein each transmit path comprises:
a transmit antenna;
a phase rotator; and
wherein the phase rotator is configured to, for each output radar signal, apply:
a Doppler Division Multiplexing, DDM, phase rotation to each output radar signal prior to transmission by the transmit antenna, and,
a scrambling phase rotation to each output radar signal prior to transmission by the transmit antenna, wherein:
the DDM phase rotation applied by each phase rotator of each transmit path is according to a DDM phase schedule; and
the scrambling phase rotation applied by each phase rotator of each transmit path is the same as the scrambling phase rotation applied by each other phase rotator of the other transmit paths.

10. A method of performing ranging and detection using a multiple input multiple output, MIMO, radar system that comprises a plurality of transmit paths wherein each transmit path comprises a transmit antenna and a phase rotator, the method comprising for each transit path:
receiving an output radar signal at the phase rotator;
applying, by way of the phase rotator, a Doppler Division Multiplexing (DDM) phase rotation to each output radar signal prior to transmission by a transmit antenna;
applying, by way of the phase rotator, a scrambling phase rotation to each output radar signal prior to transmission by the transmit antenna, wherein:
the DDM phase rotation applied by each phase rotator of each transmit path is according to a DDM phase schedule;
the scrambling phase rotation applied by each phase rotator of each transmit path is the same as the scrambling phase rotation applied by each other phase rotator of the other transmit paths;
transmitting the phase-rotated output radar signal by way of the transmit antenna,
the method further comprising, at a plurality of receive paths wherein each receive path comprises a receiver:
receiving, by way of the receiver, reflected versions of the output radar signals from a reflector.

11. An automotive vehicle comprising the radar system of any of claims 1 - 8.

## Patentansprüche

1. Radarsystem mit mehreren Eingängen und mehreren Ausgängen, MIMO, das Folgendes umfasst:
mehrere Sendepfade, wobei jeder Sendepfad dazu ausgelegt ist, ein entsprechendes Ausgangsradarsignal zur Detektion und Entfernungsmessung zu übertragen, wobei jeder Sendepfad Folgendes umfasst:
eine Sendeantenne;
einen Phasenrotator; und
wobei der Phasenrotator dazu ausgelegt ist, für jedes Ausgangsradarsignal Folgendes anzuwenden:
eine Doppler-Divisionsmultiplexing- bzw. DDM-Phasendrehung auf jedes Ausgangsradarsignal vor der Übertragung durch die Sendeantenne, und,
eine Verwürfelungsphasendrehung auf jedes Ausgangsradarsignal vor der Übertragung durch die Sendeantenne, wobei:
die DDM-Phasendrehung, die durch jeden Phasenrotator jedes Sendepfades angewendet wird, einem DDM-Phasenplan entspricht; und
die Verwürfelungsphasendrehung, die von jedem Phasenrotator jedes Sendepfades angewendet wird, die gleiche ist wie die Verwürfelungsphasendrehung, die von jedem anderen Phasenrotator der anderen Sendepfade angewendet wird; und
wobei das MIMO-System ferner mehrere Empfangspfade umfasst, die dazu ausgelegt sind, reflektierte Versionen der Ausgangsradarsignale von einem Reflektor zu empfangen.

2. MIMO-Radarsystem nach Anspruch 1, wobei die übertragenen Radarsignale frequenzmodulierte Dauerstrichradarsignale sind.

3. MIMO-Radarsystem nach einem der vorhergehenden Ansprüche, das ferner eine Phasenrotationssteuerung umfasst, die dazu ausgelegt ist, die DDM-Phasendrehung und die Verwürfelungsphasendrehung zu steuern, die von jedem der Phasenrotatoren jedes der Sendepfade angewendet wird.

4. MIMO-Radarsystem nach einem der vorhergehenden Ansprüche, wobei das MIMO-System dazu ausgelegt ist, jeden Sender zu veranlassen, einen Satz von Radarsignalen zu senden, wobei der Satz von Radarsignalen eine vorbestimmte Anzahl von nacheinander gesendeten Radarsignalen umfasst und wobei die Verwürfelungsphasendrehung für jedes gesendete Radarsignal in dem Satz von gesendeten Radarsignalen unterschiedlich ist.

5. MIMO-Radarsystem nach Anspruch 4, wobei die Verwürfelungsphasendrehungen so ausgewählt sind, dass sie mindestens eine Teilmenge des vollen Bereichs möglicher Phasendrehungen des Phasenrotators abdecken.

6. MIMO-Radarsystem nach Anspruch 5, wobei die Verwürfelungsphasendrehungen so ausgewählt sind, dass sie den gesamten Bereich möglicher Phasendrehungen des Phasenrotators abdecken.

7. MIMO-Radarsystem nach Anspruch 6, wobei die Phasenrotationssteuerung dazu ausgelegt ist, einen Modulo-Betrieb auf die Phasenversätze anzuwenden, um Werte innerhalb des programmierbaren Bereichs der Phasenrotatoren aufrechtzuerhalten.

8. MIMO-Radarsystem nach einem der vorhergehenden Ansprüche, wobei die Verwürfelungsphasendrehungen eine aus einer zufälligen; und einer pseudozufällig bestimmten Phasendrehung sind.

9. Übertragungseinrichtung eines Radarsystems mit mehreren Eingängen und mehreren Ausgängen, MIMO, die Folgendes umfasst:
mehrere Sendepfade, wobei jeder Sendepfad dazu ausgelegt ist, ein entsprechendes Ausgangsradarsignal zur Detektion und Entfernungsmessung zu übertragen, wobei jeder Sendepfad Folgendes umfasst:
eine Sendeantenne;
einen Phasenrotator; und
wobei der Phasenrotator dazu ausgelegt ist, für jedes Ausgangsradarsignal Folgendes anzuwenden:
eine Doppler-Divisionsmultiplexing- bzw. DDM-Phasendrehung auf jedes Ausgangsradarsignal vor der Übertragung durch die Sendeantenne, und,
eine Verwürfelungsphasendrehung auf jedes Ausgangsradarsignal vor der Übertragung durch die Sendeantenne, wobei:
die DDM-Phasendrehung, die durch jeden Phasenrotator jedes Sendepfades angewendet wird, einem DDM-Phasenplan entspricht; und
die Verwürfelungsphasendrehung, die von jedem Phasenrotator jedes Sendepfades angewendet wird, die gleiche ist wie die Verwürfelungsphasendrehung, die von jedem anderen Phasenrotator der anderen Sendepfade angewendet wird.

10. Verfahren zum Durchführen von Entfernungsmessung und Detektion unter Verwendung eines Radarsystems mit mehreren Eingängen und mehreren Ausgängen, MIMO, das mehrere Sendepfade umfasst, wobei jeder Sendepfad eine Sendeantenne und einen Phasenrotator umfasst, wobei das Verfahren für jeden Sendepfad Folgendes umfasst:
Empfangen eines Ausgangsradarsignals an dem Phasenrotator;
Anwenden, über den Phasenrotator, einer Doppler-Divisionsmultiplexing- bzw. DDM-Phasendrehung auf jedes Ausgangsradarsignal vor der Übertragung durch eine Sendeantenne;
Anwenden, über den Phasenrotator, einer Verwürfelungsphasendrehung auf jedes Ausgangsradarsignal vor der Übertragung durch die Sendeantenne, wobei:
die DDM-Phasendrehung, die durch jeden Phasenrotator jedes Sendepfades angewendet wird, einem DDM-Phasenplan entspricht;
die Verwürfelungsphasendrehung, die von jedem Phasenrotator jedes Sendepfades angewendet wird, die gleiche ist wie die Verwürfelungsphasendrehung, die von jedem anderen Phasenrotator der anderen Sendepfade angewendet wird;
Senden des phasengedrehten Ausgangsradarsignals über die Sendeantenne,
wobei das Verfahren ferner an mehreren Empfangspfaden Folgendes umfasst, wobei jeder Empfangspfad einen Empfänger umfasst:
Empfangen, über den Empfänger, von reflektierten Versionen der Ausgangsradarsignale von einem Reflektor.

11. Kraftfahrzeug, das das Radarsystem nach einem der Ansprüche 1 - 8 umfasst.

## Revendications

1. Système radar à entrées multiples et sorties multiples, MIMO, comprenant :
une pluralité de chemins d'émission, dans lequel chaque chemin d'émission est configuré pour émettre un signal radar de sortie correspondant à des fins de détection et de télémétrie, dans lequel chaque chemin d'émission comprend :
une antenne d'émission ;
un rotateur de phase ; et
dans lequel le rotateur de phase est configuré pour, pour chaque signal radar de sortie, appliquer :
une rotation de phase à multiplexage par répartition Doppler, DDM, à chaque signal radar de sortie avant émission par l'antenne d'émission, et
une rotation de phase de brouillage à chaque signal radar de sortie avant émission par l'antenne d'émission, dans lequel :
la rotation de phase DDM appliquée par chaque rotateur de phase de chaque chemin d'émission est effectuée selon un programme de phase DDM ; et
la rotation de phase de brouillage appliquée par chaque rotateur de phase de chaque chemin d'émission est la même que la rotation de phase de brouillage appliquée par chaque autre rotateur de phase des autres chemins d'émission ; et
dans lequel le système MIMO comprend en outre une pluralité de chemins de réception configurés pour recevoir des versions réfléchies des signaux radar de sortie provenant d'un réflecteur.

2. Système radar MIMO selon la revendication 1, dans lequel les signaux radar transmis sont des signaux radar à ondes continues modulés en fréquence.

3. Système radar MIMO selon l'une quelconque des revendications précédentes, comprenant en outre un dispositif de commande de rotation de phase configuré pour commander la rotation de phase DDM et la rotation de phase de brouillage appliquées par chacun des rotateurs de phase de chacun des chemins d'émission.

4. Système radar MIMO selon l'une quelconque des revendications précédentes, dans lequel le système MIMO est configuré pour amener chaque émetteur à émettre un ensemble de signaux radar, dans lequel l'ensemble de signaux radar comprend un nombre prédéterminé de signaux radar transmis consécutivement et dans lequel la rotation de phase de brouillage est différente pour chaque signal radar émis de l'ensemble de signaux radar émis.

5. Système radar MIMO selon la revendication 4, dans lequel les rotations de phase de brouillage sont sélectionnées pour couvrir au moins un sous-ensemble de la plage complète de rotations de phase possibles du rotateur de phase.

6. Système radar MIMO selon la revendication 5, dans lequel les rotations de phase de brouillage sont sélectionnées pour couvrir la plage complète de rotations de phase possibles du rotateur de phase.

7. Système radar MIMO selon la revendication 6, dans lequel le dispositif de commande de rotation de phase est configuré pour appliquer une opération modulo aux décalages de phase afin de maintenir des valeurs dans la plage programmable des rotateurs de phase.

8. Système radar MIMO selon l'une quelconque des revendications précédentes, dans lequel les rotations de phase de brouillage sont l'une d'une rotation de phase aléatoire ; et d'une rotation de phase déterminée pseudo-aléatoirement.

9. Appareil d'émission d'un système radar à entrées multiples et sorties multiples, MIMO, comprenant :
une pluralité de chemins d'émission, dans lequel chaque chemin d'émission est configuré pour émettre un signal radar de sortie correspondant à des fins de détection et de télémétrie, dans lequel chaque chemin d'émission comprend :
une antenne d'émission ;
un rotateur de phase ; et
dans lequel le rotateur de phase est configuré pour, pour chaque signal radar de sortie, appliquer :
une rotation de phase à multiplexage par répartition Doppler, DDM, à chaque signal radar de sortie avant émission par l'antenne d'émission, et
une rotation de phase de brouillage à chaque signal radar de sortie avant émission par l'antenne d'émission, dans lequel :
la rotation de phase DDM appliquée par chaque rotateur de phase de chaque chemin d'émission est effectuée selon un programme de phase DDM ; et
la rotation de phase de brouillage appliquée par chaque rotateur de phase de chaque chemin d'émission est la même que la rotation de phase de brouillage appliquée par chaque autre rotateur de phase des autres chemins d'émission.

10. Procédé de télémétrie et de détection au moyen d'un système radar à entrées multiples et sorties multiples, MIMO, qui comprend une pluralité de chemins d'émission, dans lequel chaque chemin d'émission comprend une antenne d'émission et un rotateur de phase, le procédé comprenant pour chaque chemin d'émission :
la réception d'un signal radar de sortie au niveau du rotateur de phase ;
l'application, au moyen du rotateur de phase, d'une rotation de phase à multiplexage par répartition Doppler (DDM) à chaque signal radar de sortie avant émission par une antenne d'émission ;
l'application, au moyen du rotateur de phase, d'une rotation de phase de brouillage à chaque signal radar de sortie avant émission par l'antenne d'émission, dans lequel :
la rotation de phase DDM appliquée par chaque rotateur de phase de chaque chemin d'émission est effectuée selon un programme de phase DDM ;
la rotation de phase de brouillage appliquée par chaque rotateur de phase de chaque chemin d'émission est la même que la rotation de phase de brouillage appliquée par chaque autre rotateur de phase des autres chemins d'émission ;
l'émission du signal radar de sortie soumis à une rotation de phase au moyen de l'antenne d'émission,
le procédé comprenant en outre, au niveau d'une pluralité de chemins de réception dans lequel chaque chemin de réception comprend un récepteur :
la réception, au moyen du récepteur, de versions réfléchies des signaux radar de sortie provenant d'un réflecteur.

11. Véhicule automobile comprenant le système radar selon l'une quelconque des revendications 1 à 8.
